# EUROPEAN PATENT APPLICATION

(11) **EP 4 488 140 A1**
(43) Date of publication of application: **08.01.2025**
(21) Application number: 22929385.7
(22) Date of filing: 04.03.2022
(51) Int. Cl.: B60W 60/00

(54) **VEHICLE CONTROL METHOD AND APPARATUS, AND VEHICLE, PROGRAM PRODUCT AND STORAGE MEDIUM**

(71) Applicant: SZ Zhuoyu Technology Co., Ltd., Shenzhen, Guangdong 518057 (CN)
(72) Inventor: ZHANG, Wei, Shenzhen, Guangdong 518057 (CN); ZHOU, You, Shenzhen, Guangdong 518057 (CN); LIU, Sikang, Shenzhen, Guangdong 518057 (CN)
(74) Representative: Botti & Ferrari S.p.A.
(86) International application number: PCT/CN2022/079371
(87) International publication number: WO 2023/164942

(57) **Abstract**

The present application provides a vehicle control method and apparatus, vehicle, program product, and storage medium, in which a commonly used route of a vehicle is determined based on a plurality of driving trajectories of the vehicle in multiple historical trips. Since the vehicle frequently travels along the commonly used route, historical road section description information on the commonly used route can be collected during each historical traveling. Accordingly, traffic guidance information for the commonly used routes can be constructed based on the historical road section description information, and the traffic guidance information can be used to generate motion control instructions for guiding the vehicle to travel along the commonly used routes. Through the above method, even in urban areas that are difficult to be covered by high definition maps, it is possible to realize autonomous driving along commonly used routes, which reduces the difficulty of technology realization of the autonomous driving.

## Description

### FIELD

The present application relates to the field of automotive technology. In particular, the present application relates to a vehicle control method and apparatus, a vehicle, a program product and a storage medium.

### BACKGROUND

With the rapid development in the autonomous driving field, the intelligence and autonomy of autonomous driving technology are improving day by day, and its application scenarios are also becoming more and more diverse. The autonomous driving of vehicles relies on the positioning and navigation by means of high definition maps, while the high cost of establishing the high definition maps renders it difficult to cover all urban areas. In urban areas not covered by high definition maps, it is often difficult for vehicles to realize autonomous driving.

### SUMMARY

In view of the above, one of the objects of the present application is to provide a method, apparatus, vehicle, program product and storage medium for controlling a vehicle aiming to reduce the difficulty in technology implementation of automated vehicle driving.

To achieve the desired technical effect, embodiments of the present application disclose the following technical solution:

In a first aspect, a vehicle control method is provided, the method including:
obtaining driving trajectories of a vehicle in multiple historical trips;
determining a commonly used route of the vehicle based on a plurality of the driving trajectories;
obtaining historical road section description information collected during historically traveling of the vehicle on one or more sections of the commonly used route; and
constructing traffic guidance information for the commonly used route based on the historical road section description information, the traffic guidance information being used to generate motion control instructions for guiding the vehicle along one or more of the road sections of the commonly used route.

In a second aspect, a vehicle control method is provided, the method including:
obtaining traffic guidance information for a commonly used route of a vehicle, the traffic guidance information being generated based on road section description information collected during historically traveling of the vehicle on one or more sections of the commonly used route; and
generating control instructions for the vehicle based on the traffic guidance information, and controlling the vehicle to drive automatically along the commonly used route based on the control instructions.

In a third aspect, there is provided a vehicle control apparatus comprising:
a processor; and
a memory for storing processor executable instructions,
wherein the processor carries out the operation of the method according to the first aspect by invoking the executable instructions.

In a fourth aspect, a vehicle is provided, comprising:
a bodywork;
a power assembly;
a processor; and
a memory for storing processor executable program instructions,
wherein the processor carries out the operation of the method according to the first aspect by invoking the executable instructions.

In a fifth aspect, there is provided a computer program product including a computer program, wherein the computer program performs the steps of the method according to the first aspect when executed by a processor.

In a sixth aspect, there is provided a storage medium, the machine-readable storage medium storing computer instructions which, when being executed, perform the method according to the first aspect.

The present application provides a vehicle control method and apparatus, a vehicle, a program product, and a storage medium, which determine a commonly used route for a vehicle based on driving trajectories of the vehicle in multiple historical trips. Since the vehicle frequently travels along the commonly used route, historical road section description information on the commonly used route can be collected each time the vehicle traveled. In this way, based on the historical road section description information, traffic guidance information on the commonly used routes can be constructed, and the traffic guidance information can be used to generate motion control instructions for guiding the vehicle to travel along one or more road sections of the commonly used routes. According to the above method, even in urban areas that are difficult to be covered by high definition maps, it is possible to realize autonomous driving of a vehicle on commonly used routes, which reduces the difficulty of technology realization of the autonomous driving.

### BRIEF DESCRIPTION OF THE DRAWINGS

In order to more clearly illustrate the technical solutions in the embodiments of the present application, the accompanying drawings to be used in the description of the embodiments will be briefly introduced below. It will be obvious that the accompanying drawings in the following description are only some but not all the embodiments of the present application, and other accompanying drawings can be conceived based on these drawings for a person of ordinary skill in the art without inventive effort.
FIG. 1 is a flowchart of a control method of a vehicle according to an embodiment of this application.
FIG. 2 is a flowchart of a control method of a vehicle according to another embodiment of the present application.
FIG. 3(a) is a flowchart of a control method of a vehicle according to another embodiment of the present application.
FIG. 3(b) is a flowchart of a control method of a vehicle according to another embodiment of the present application.
FIG. 4 is a flowchart of a control method of a vehicle according to another embodiment of the present application.
FIG. 5 is a flowchart of a control method of a vehicle according to another embodiment of the present application.
FIG. 6 is a flowchart of a control method of a vehicle according to another embodiment of the present application.
FIG. 7 is a flowchart of a control method of a vehicle according to another embodiment of the present application.
FIG. 8 is a flowchart of a control method of a vehicle according to another embodiment of the present application.
FIG. 9(a)-FIG. 9(c) is a schematic diagram of an interaction interface of a vehicle according to an embodiment of the present application.
FIG. 10 is a flowchart of a control method of a vehicle according to another embodiment of the present application.
FIG. 11 is a schematic diagram of a commonly used route according to an embodiment of the present application.
FIG. 12 is a schematic diagram of a structure of a vehicle control device according to an embodiment of the present application.
FIG. 13 is a block diagram of a structure of a vehicle according to an embodiment of the present application.

### DETAILED DESCRIPTION

The technical solutions in the embodiments of the present application will be described clearly and completely in the following in conjunction with the accompanying drawings. Apparently, the illustrated embodiments are only a part of and not all the embodiments of the present application. Based on the embodiments in this application, all other embodiments obtained by a person of ordinary skill in the art without making inventive effort fall within the scope of the present application.

With the rapid development in the field of autonomous driving, the intelligence and autonomy of autonomous driving technology are increasing day by day, and its application scenarios are becoming more and more diverse. The autonomous driving of vehicles relies on the positioning and navigation of high definition maps. However, the construction of high definition maps requires the use of specialized collection vehicles to collect data. The specialized vehicles need to drive on the same road several times in the early morning when there are fewer vehicles to collect enough data. After massive data processing in the background, the high definition map can be constructed, which renders a high cost of constructing a high definition maps. Nowadays, it is still not available for high definition maps to realize the coverage of the whole region and multiple urban areas. In urban areas not covered by high definition maps, it is often difficult for vehicles to realize autonomous driving, which increases difficulty in technology realization of autonomous driving.

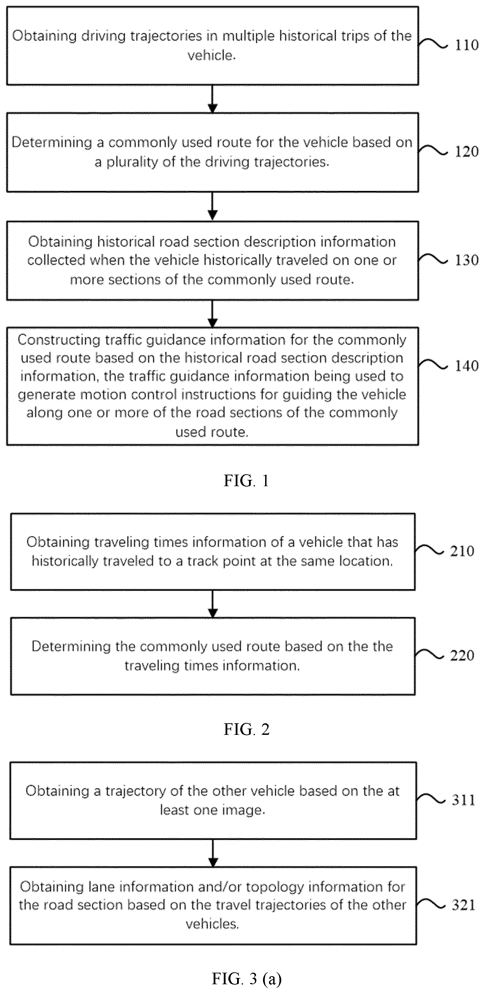

To reduce the difficulty of technological realization of automatic vehicle driving, especially for areas not fully covered by high definition maps, the present application provides a vehicle control method, including the steps shown in FIG. 1.

Step 110: obtaining a driving trajectory for multiple historical trips of the vehicle.

The driving trajectory of the historical driving may include a historically planned navigation route extracted from the navigation map. Optionally, the driving trajectories of multiple historical driving may include the same start position and destination position. In addition, the starting positions and destination positions of different traveling trajectories may be opposite.

The historical driving trajectory may also include trajectory positioning information that is collected by the vehicle's autopilot. In the case of navigation by cell phone, the vehicle, or the autopilot controller, or the cloud control platform, may not record the user's whole route plan, but rather the vehicle's positional track points generated by the plurality of positioned points.

Step 120: determining a commonly used route for the vehicle based on a plurality of the driving trajectories.

The commonly used route comprises at least one road section.

Step 130: obtaining historical road section description information collected when the vehicle historically traveled on one or more sections of the commonly used route.

Step 140: constructing traffic guidance information for the commonly used route based on the historical road section description information. The traffic guidance information is used to generate motion control instructions for guiding the vehicle along one or more the road sections of the commonly used route.

The above-described method may be performed by various electronic devices. As an example, the method steps described above may be performed by a vehicle. In order to reduce the vehicle processor load, one or more of the above steps 110-140 may be performed while the vehicle is in a non-driving state. For example, traffic guidance information for commonly used routes may be constructed at a moment when the vehicle is charging or the vehicle processor is idle.

In another example, the above method steps may be performed by other electronic devices external to the vehicle. The other electronic device external to the vehicle may be communicatively connected to the vehicle to obtain data required for constructing the traffic guidance information. For example, the required data may include, but is not limited to, a historical driving trajectory of the vehicle, historical road section description information, and the like. The other electronic device, after completing the construction of the traffic guidance information, may transmit the traffic guidance information to the vehicle via communication link to enable the vehicle to generate motion control instructions using the traffic guidance information.

As another example, the above steps may also be performed by different electronic devices. For example, steps 110-120 may be performed by the vehicle to determine a commonly used route for the vehicle. Considering the limited computing power of the vehicle's processor, the vehicle may send the corresponding historical road section description information of the determined commonly used routes to other electronic devices communicatively connected to the vehicle, such as a server, etc., to let the other electronic devices construct traffic guidance information for the commonly used routes based on the historical road section description information.

Vehicles are typically equipped with one or more sensors to collect environmental information about the environment in which the vehicle is located. The sensors may include vision sensors (e.g., a plurality of monocular or binocular vision devices), lidar, millimeter wave radar, an inertial measurement unit (IMU), a global navigation satellite system (e.g., Global Positioning System (GPS)), a gyroscope, an ultrasonic sensor, gyroscope, ultrasonic sensor, electronic compass, and barometer, or one or more of these sensors. When a vehicle is traveling, track points carrying information about the vehicle's position can be generated at regular intervals or after a certain distance. A plurality of track points may form a driving trajectory in one historical traveling. The position information carried by the track points is obtained through a positioning module carried by the vehicle, and may also be obtained from the environmental information around the vehicle collected by the above-described sensors. In this way, the process of determining the commonly used route in the above step 120 may include the steps shown in FIG. 2.

Step 210: obtaining traveling times information of a vehicle that has historically traveled to a track point at the same location.

Step 220: determining the commonly used route based on the traveling times information.

The commonly used routes of a vehicle are the routes that are frequently traveled by the vehicle. From the perspective of the machine, to determine the commonly used route of the vehicle, the track points belonging to the same location can be determined by comparing the position information of the track points included in different traveling tracks. If the number of traveling times of the track points of the vehicle's history traveling to the same location is more than a preset number, the route formed by these track points can be taken as the vehicle's commonly used route.

In some cases, the multiple driving trajectories of the vehicle have the same starting and ending points and pass through the same locations on the way, and the driving routes corresponding to such driving trajectories may be commonly used routes of the vehicle, such as commuting routes for commuting to and from work. In other cases, although the multiple traveling trajectories of the vehicle do not have the same starting point and/or end point, the vehicle has passed through the same road section in different historical travels, i.e., the multiple traveling trajectories include a plurality of track points at the same location, so that the trajectory formed by these track points may be a commonly used route of the vehicle. For example, every time the driver drives the vehicle, the vehicle needs to move from the parking space to a diversion location, such as an entrance to the neighborhood, an intersection, and so on. Then the driving route from the parking space to the diversion location can be defined as the commonly used route of the vehicle. Alternatively, the commonly used route of the vehicle can be set by a user, such as a driver. In this case, the number of times the vehicle travels on the set commonly used route may or may not be greater than the number of times threshold.

A commonly used route may include at least one road section, and the vehicle may continuously collect road section description information for the road section while traveling on the road section. The road section description information collected during the historical traveling of the vehicle is referred to as historical road section description information. Among other things, the road section may include a plurality of lanes. If a vehicle travels on different lanes of the same road section during different historical travels, the collected information can be regarded as the historical road section description information of the same road section. In other words, the historical road section description information of a road section may include the historical road section description information collected when the vehicle is traveling on different lanes of the road section historically.

As described above, the vehicle may be equipped with sensors facing the exterior of the vehicle, and the sensors may include, but are not limited to, an image sensor, a microwave radar, a lidar, and the like. Historical road section description information can be obtained through images collected by the image sensor, and/or echoes collected by the microwave radar, and/or point clouds collected by the lidar. The vehicle may also be equipped with a communication device, such as a V2X (vehicle-to-everything) communication device, and the historical road section description information may be road section description information sent by other devices received via the communication device.

The sensor carried by the vehicle may include an image sensor, the image sensor may collect images around the vehicle while the vehicle is traveling, and historical road section description information may be obtained based on at least one image collected by the image sensor.

As an example, the image content of at least one of the above images may include other vehicles traveling on the road section, so that the process of obtaining the historical road section description information may include the steps shown in FIG. 3(a):
Step 311: obtaining a trajectory of the other vehicle based on the at least one image.
Step 321: obtaining lane information and/or topology information for the road section based on the driving trajectories of the other vehicles.

By means of at least one image collected by the image sensor, the direction of the traffic flow can be recognized, or by means of a plurality of images, the driving trajectory of a vehicle traveling on the road section can be obtained, so as to obtain the lane information and/or topology information of the road section based on the direction of the traffic flow and/or the driving trajectory of a vehicle. The lane information may include, but is not limited to, number of lanes, lane type information, and lane position information. The lane type may include, but are not limited to, switchable lanes/non-switchable lanes, straight ahead/turning lanes, and the like. The topology information may include information on whether any lane in each of a plurality of consecutive road sections, a lane in the next road section adjacent to the road section, is directly passable.

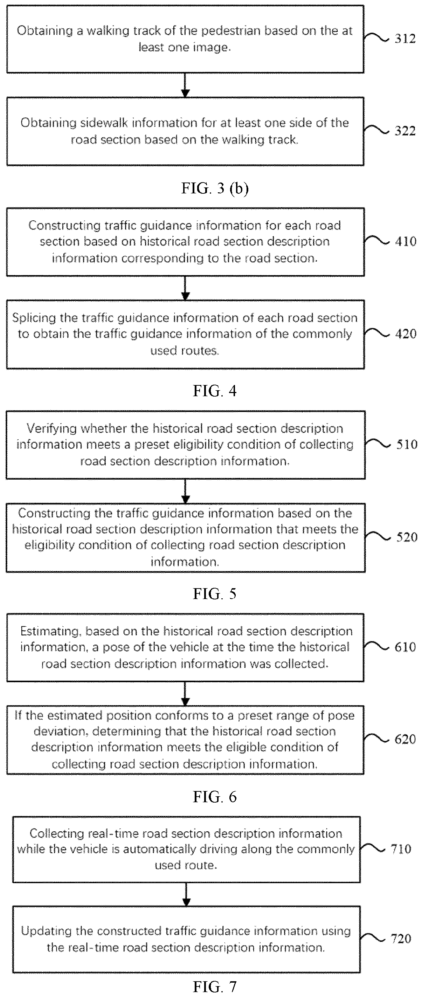

As an example, the image content of the at least one of the above images may include pedestrians, and in this way, the process of obtaining the historical road section description information may include the steps shown in FIG. 3(b):
Step 312: obtaining a walking track of the pedestrian based on the at least one image.
Step 322: obtaining sidewalk information for at least one side of the road section based on the walking track.

By means of the at least one image collected by the image sensor, a walking trajectory of the traveler can be recognized, so that sidewalk information on at least one side of the road section can be predicted based on the walking trajectory. Wherein, the sidewalk information may include, but is not limited to, sidewalk quantity information, sidewalk position information, and the like.

In this way, using the historical images collected by the image sensor, one or more of the lane information, topology information, and sidewalk information of the road section can be obtained, which can be used as the road section description information of the road section.

Using the historical road section description information, traffic guidance information for commonly used routes can be constructed. For example, the traffic guidance information can include the distribution of lanes (e.g., lane lines, sidewalks, stop lines, etc.), traffic signs (e.g., road markings, street signs, etc.), access information (e.g., traffic lights, etc.), and information about the environmental scenery (e.g., the location of street lamps, trees, and buildings, etc.) of the road section. In some cases, the traffic guidance information can be presented in the form of a map, and the constructed traffic guidance information can be regarded as a simple version of a high definition map. Using the traffic guidance information, motion control instructions can be generated to guide the vehicle along commonly used routes, and through the motion control instructions, the vehicle can be controlled to drive automatically along commonly used routes.

The present application provides a vehicle control method to determine a commonly used route for the vehicle based on a driving trajectory of the vehicle for multiple historical trips. Since the vehicle frequently travels along the commonly used route, historical road section description information on the commonly used route can be collected each time of the vehicle's historical travel. In this way, based on the historical road section description information, traffic guidance information for the commonly used routes can be constructed, and the traffic guidance information can be used to generate motion control instructions for guiding the vehicle to travel along the commonly used routes. Through the motion control instructions, the vehicle can be controlled to drive automatically along the commonly used routes. Overall, after driving on the same route for many times, the vehicle can utilize the constructed traffic guidance information to realize autonomous driving on the commonly used routes. Such a driving ability can be called memorized driving of the vehicle. Memorized driving is a new autonomous driving technology that greatly improves the intelligence and autonomy of vehicles. By using the above-mentioned memorized driving technology, even in urban areas that are difficult to be covered by high definition maps, it is possible to realize autonomous driving on commonly used routes, which reduces the difficulty of technological realization of autonomous driving.

Commonly used routes may include multiple road sections, each with corresponding historical road section description information. The traffic guidance information may be constructed in segments according to the plurality of road sections. The road sections may be segmented in one or more of the following ways.

Mode 1: commonly used routes are divided into sections according to equal distances. For example, a commonly used route can be divided into sections at equal distances every 5 kilometers.

Mode 2: the commonly used routes are divided into multiple road sections according to the completion degree of collecting road section description information required for constructing traffic guidance information. The construction of traffic guidance information relies on enough road section description information, and the construction of the traffic guidance information can be started when the collection of road section descriptive information meets certain conditions. The completion degree of collecting road section descriptive information can be used to characterize the progress of the collection work. The completion degree can be obtained by comparing the amount of road section descriptive information needed to construct traffic guidance information with the amount of historical road section descriptive information that has been collected so far. Road sections might have various difficulties in collecting road section descriptive information. For example, for relatively congested road sections, it is more difficult to collect road section descriptive information, and vehicles may have to travel more times to collect enough road section descriptive information. Therefore, road sections can be divided according to the completion degree of collecting road section description information. In order to speed up the construction of traffic guidance information, the construction of traffic guidance information for a road section whose collection completion degree reaches the completion threshold can be started.

Mode 3: commonly used routes are divided into road sections according to road section types which may include, but are not limited to, one or more of the following: highway road sections, urban road sections, straight road sections, turning road sections, congested road sections, or non-congested road sections. Road sections can also be divided according to different urban road section types.

In some embodiments, the commonly used routes may be divided in accordance with the above-described multiple ways. For example, the commonly used routes are first divided into a plurality of first-class road sections in accordance with the type of road sections, and then each first-class road section is divided into at least one second-class road section in accordance with the completion degree of the collection of road section description information of each first-class road section. Finally, each second-level road section is divided into at least one third-level road section according to the distance, so that the road section distance is not too long.

In this embodiment, the commonly used route may include a plurality of road sections, each of which has corresponding historical road section description information. Among them, the historical road section description information of a certain road section may include the road section description information collected when the vehicle passes through the road section while traveling along the history of the commonly used route. It may also include the road section description information collected when the vehicle passes through the road section while traveling along other routes. That is, if a vehicle does not travel along the commonly used route in a certain historical travel, but still passes through a certain road section included in the commonly used route in that historical travel, then the road section description information collected when the vehicle passes through the road section in that historical travel can also be used as the historical road section description information used for constructing traffic guidance information for the road section.

Since each road section has corresponding historical road section description information, traffic guidance information for commonly used routes can be constructed in segments according to multiple road sections, including the steps shown in FIG. 4.

Step 410: constructing traffic guidance information for each the road section based on historical road section description information corresponding to the road section.

Step 420: splicing the traffic guidance information of each road section to obtain the traffic guidance information of the commonly used routes.

The traffic guidance information of the commonly used routes can be obtained by constructing the traffic guidance information of each road section separately and then splicing the traffic guidance information of each road section. By constructing the traffic guidance information of the commonly used routes in segments, on the one hand, the construction speed is accelerated because it is not necessary to construct the traffic guidance information after the road section description information of the commonly used routes has been collected. At the same time, for the road sections where the traffic guidance information has been constructed, it is possible for vehicles to realize autonomous driving on the road sections. On the other hand, the segmented traffic guidance information can be constructed at different time periods, which is conducive to reducing the computational pressure on the processor.

In some embodiments, if there is an error in the historical road information collected by the vehicle, for example, the credibility of the historical road information collected in rainy or foggy days will be relatively low, the historical road information with low credibility may affect the accuracy of the constructed traffic guidance information. Therefore, in some embodiments, the process of constructing the traffic guidance information may include steps as shown in FIG. 5.

Step 510: verifying whether the historical road section description information meets a preset eligibility condition of collecting road section description information.

Step 520: constructing the traffic guidance information based on the historical road section description information that meets the eligibility condition of collecting road section description information.

That is, the historical road section description information collected by the vehicle is subjected to a qualification test, and the historical road section description information that passes the qualification test may be used for the construction of traffic guidance information. As an example, the historical road section description information of a certain road section may be collected by a sensor carried by a vehicle when the vehicle is traveling at the same location of the road section for several times, then the qualification test of the historical road section description information may include the steps shown in FIG. 6.

Step 610: estimating, based on the historical road section description information, a pose of the vehicle at the time the historical road section description information was collected.

Step 620: if the estimated position meets a preset pose deviation range, determining that the historical road section description information meets a preset eligibility condition of collecting road section description information.

The historical road section description information can be used to estimate the pose at which the vehicle collected the historical road section description information. Theoretically, the pose information estimated from the historical road section description information collected by the vehicle passing the same location several times is consistent. Therefore, it can be based on whether the estimated pose of the historical road section description information is in line with the preset pose deviation range to determine whether the historical road section description information meets the qualification conditions for road section description information acquisition. Taking the image sensor as an example, when the vehicle is traveling to the same location on the road section many times, the image collected by the image sensor may include the same image content. Based on the same image content, the pose of the vehicle at the time of acquisition of the image can be estimated. If the deviation between the poses estimated using the plurality of images respectively conforms to a preset range of postures deviation, it can be judged that the historical road section description information acquired from the images conforms to the eligibility conditions of collecting the road section description information, namely passing the qualification test. In some embodiments, if any of the estimated poses does not conform to the predetermined pose deviation range, an error message may be generated. The use of historical roadway information that passes the qualification test to construct traffic guidance information in this embodiment can effectively reduce the impact of historical roadway information with low reliability on the accuracy of the traffic guidance information, and thus improve the reliability of the vehicle's autonomous driving based on the traffic guidance information.

As mentioned above, the historical road section description information for a particular road section is collected during the historical traveling of vehicles on that road section. However, the difficulty of collecting road section description information varies from road section to road section. For example, on relatively congested road sections, it is more difficult to collect the road section description information, and the vehicle may have to travel more times before sufficient road section description information is collected. In some embodiments, if the number of times the vehicle has traveled on a road section exceeds a number of times threshold, while the vehicle still fails to collect the road section description information on the road section, or has not yet collected enough road section description information for constructing traffic guidance information, which means the completion of the collection of the road section description information is low, then a prompt message may be output indicating that the collection of the road section description information on the road section has failed. In some embodiments, the prompting message may include a reason for the failure of collecting the road section description information and/or the missing road section description information. The reasons for the failure of collecting the road section description information may include, but are not limited to: a congested road section with serious obstruction by surrounding vehicles; insufficient ambient light; and the like. The missing road section description information may include, but is not limited to: missing lane lines, missing traffic signs, missing environmental scenery, etc. In this way, the user may choose to drive the vehicle to the road section with the missing road section description information according to the alert message, so as to enable the vehicle to complete the collection of the road section description information.

In some embodiments, when the construction of the traffic guidance information is completed, the constructed traffic guidance information may also be sent to an electronic device in communication with the vehicle via a communication module carried by the vehicle. As an example, the communication module may be a V2X communication device as described above. If other vehicles or other transportation devices on the road are also equipped with the V2X communication device, the traffic guidance information can be shared to the other vehicles or transportation devices.

In order to further refine and update the traffic guidance information, in some embodiments, after completing the construction of the traffic guidance information, a step as shown in FIG. 7 may also be included.

Step 710: collecting real-time road section description information while the vehicle is automatically driving along the commonly used route;
Step 720: updating the constructed traffic guidance information using the real-time road section description information.

In this way, the traffic guidance information can be continuously updated with the newly collected road section description information, which can ensure the accuracy and real-time updating of the traffic guidance information to improve the autonomous vehicle driving by making more accurate and reliable decisions.

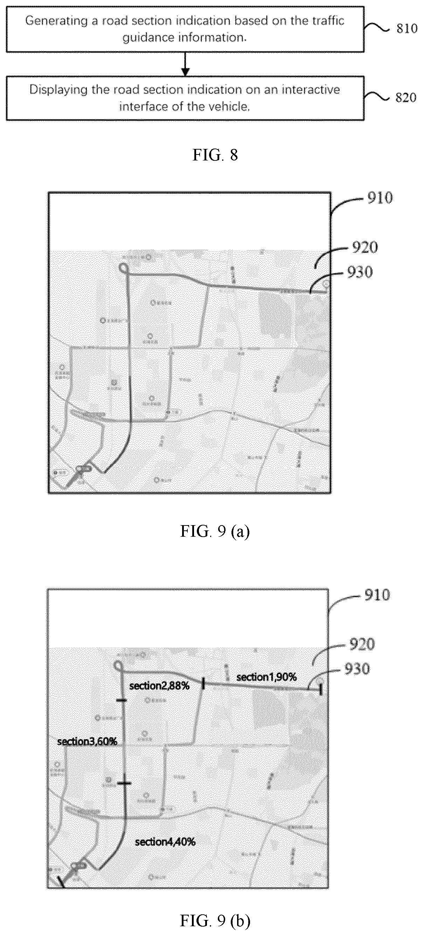

As mentioned above, after the vehicle has traveled on the same route several times, it can use the constructed traffic guidance information to realize autonomous driving on commonly used routes, i.e., to realize memorized driving. From the perspective of a user such as a driver, the user does not perceive the process of collecting road section description information or the process of constructing traffic guidance information by the vehicle during multiple trips. In other words, the whole realization process of the memorized driving technology is senseless to the user, and does not require the user's cooperation and participation, which makes the user feel that the vehicle can memorize and learn. However, from the user's point of view, when the vehicle can realize autonomous driving on a commonly used route after driving on the route for a certain number of times, just because the user is insensitive to the whole realization process of the memorized driving technology, the user may not trust the vehicle's ability of drive automatically, namely not trusting the vehicle's ability of memorizing and learning. In some cases, even if the vehicle has the ability of memorized driving, it may not be used because of the user's distrust. This will greatly restrict the use and promotion of memorized driving technology and autonomous driving technology. Therefore, in some embodiments, after completing the construction of the traffic guidance information, a step as shown in FIG. 8 may also be included to provide the user with a sensory interaction.

Step 810: generating a road section indication based on the traffic guidance information;
Step 820: displaying the road section indication on an interactive interface of the vehicle.

The commonly used route includes at least one road section, and after generating the traffic guidance information, a road section indication of the commonly used route may be further generated based on the traffic guidance information. The road section indication is displayed on the interactive interface. The interactive interface of the vehicle may include an interactive interface displayed by a display device configured within the vehicle, and may also include an interactive interface displayed by a terminal device held by the user and capable of realizing interaction with the vehicle. In this way, the user can know the commonly used route determined by the vehicle through the interactive interface.

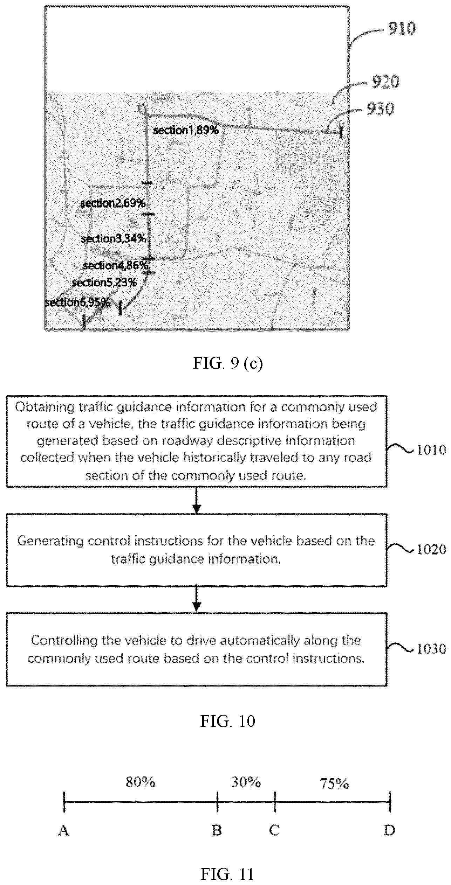

In some embodiments, as shown in FIG. 9(a), there is a navigation map 920 displayed in the interactive interface 910, then the above-described road section indication 930 may be displayed in an area of the navigation map 920 corresponding to a commonly used route. Displaying the road section indication in combination with the navigation map is more convenient for the user to view and understand.

In addition, as described above, the historical road section description information has a corresponding completion degree of collection. To allow the user to understand the completion degree of the collection of the road section description information, different display parameters may be utilized to display the road section indication to indicate the completion degree of the acquisition of the road section description information of the corresponding road section. For example, the display parameters may include, but are not limited to, one or more of color, brightness, grayscale, and transparency. That is, the completion degrees of collecting the road section description information are different, and accordingly, the road section indication are displayed on the interactive interface with different display parameters. Take the display parameter including color as an example. When the completion degree of collecting the road section description information is low, the road section indication of the road section may be displayed in red color in the interactive interface. As the completion degree of collecting road section description information increases, the road section indication can be changed from red to yellow and finally to green. Through the change in the display of the road section indication, the user can know that the vehicle is further improving the process of collecting the road section description information, thereby realizing the sensory interaction of the user during autonomous driving.

In some embodiments, the commonly used route includes a plurality of road sections, and the road section indication includes road section indications corresponding to the plurality of road sections respectively. Different road sections may correspond to different road section description information with different collection completion degrees. In this way, as shown in FIG. 9(b)-FIG. 9(c), for the road sections with different collection completion degrees, the corresponding road section indications of the road sections are differentially displayed on the interactive interface. In some embodiments, the interactive interface may also display information about the surrounding environment of a road section, such as street lights, numbers, buildings, and the like. For road sections with different collection completion degrees, the environmental area around the road section may also be differentially displayed on the interactive interface. The differentiated display may be realized by different display parameters which may include, but are not limited to, one or more of color, brightness, grayscale, and transparency. Alternatively, various road sections included in the commonly used routes may be indicated in the interactive interface in the form of text, as well as the completion degree of collecting road section description information of the various road sections.

By displaying the road section indications of the road sections included in the commonly used routes on the interaction interface of the vehicle, and using the road section indications and/or the differentiated display of the surrounding environment of the road sections to show the user the completion degree of collecting the corresponding road section descriptive information of the road sections, the user can perceive the process of the continuous collection of the road section descriptive information to improve the process of the user's sensory interactions, which will be conducive to increasing the user's trust in the memorized driving technology as well as the autonomous driving technology.

In addition, the present application provides a vehicle control method applicable to a vehicle, comprising the steps shown in FIG. 10.

Step 1010: obtaining traffic guidance information for a commonly used route of a vehicle, the traffic guidance information being generated based on road section description information collected when the vehicle historically traveled to any road section of the commonly used route.

Step 1020: generating control instructions for the vehicle based on the traffic guidance information.

Step 1030: controlling the vehicle based on the control instructions to drive automatically along the commonly used route.

Based on the traffic guidance information obtained in any of the above embodiments, control instructions for the vehicle may be generated, and based on the control instructions, the vehicle may be controlled to perform autonomous driving along commonly used routes. In some embodiments, the vehicle may also perform the autonomous driving decision in conjunction with the position information of the vehicle. In this way, during the autonomous driving of the vehicle along the commonly used routes, the vehicle may also collect current road section description information of the road section in which the vehicle is located based on the sensors carried by the vehicle, and obtain position information of the vehicle based on the current road section description information and the traffic guidance information. For example, the traffic guidance information may be carried in a simple version of the high definition map, and the position information where the vehicle is currently located may be obtained by matching the constructed traffic guidance information with the current road section description information. Subsequently, based on the position information of the vehicle and the traffic guidance information, control instructions for the autonomous driving of the vehicle can be generated.

Various methods are available for obtaining the current position of the vehicle, for example by a GPS or other positioning module equipped on the vehicle, or as another example, by local localization techniques. The local positioning techniques include inertial navigation techniques (Inertial Navigations System, INS), visual inertial navigation techniques (Visual Inertial Navigations System, VINS), and the like. In the case that the satellite positioning signal cannot be searched, local positioning technology can be utilized to obtain the current position information of the vehicle through the Inertial Measurement Unit (IMU) carried by the vehicle. Different positioning methods may be used in conjunction with each other. In some embodiments, the inertial data output from the vehicle-mounted IMU may be used to determine the first position information of the vehicle, while the above-described second position information of the vehicle may be determined based on the current road section description information and the traffic guidance information. The current position information of the vehicle may be obtained based on the first position information and the second position information.

As an example, a first weight corresponding to the first position information and a second weight corresponding to the second position information may be determined based on the progress of constructing the traffic guidance information. The progress of constructing the traffic guidance information is positively correlated with the second weight. That is, the more complete the construction of the traffic guidance information is, the higher the credibility of the second position information obtained based on the traffic guidance information. The position information of the vehicle can be determined based on the first position information, the second position information, the second weight, and the second weight.

As described above, the commonly used route of the vehicle may include a plurality of road sections, and the traffic guidance information of the commonly used route may be constructed in segments according to the plurality of road sections. In this way, each road section has a corresponding progress of construction of the traffic guidance information. As shown in FIG. 11, the commonly used route of the vehicle includes at least road section AB, road section BC, and road section CD, and if the construction progress of the traffic guidance information of road section BC, on which the vehicle is currently traveling, is lower than the construction progress of the road sections connected before and after road section BC (road section AB and road section CD) (the construction progress of road section AB is 80%, and the construction progress of road section CD is 755%, then the position information of the vehicle can be obtained based on the inertial data output from the IMU carried by the vehicle. Based on this position information, the vehicle is controlled to drive automatically along the commonly used routes. It is understandable that in the road section BC with a lower construction progress, it may not be possible to obtain more accurate vehicle position by using only the traffic guidance information due to the lower reliability of the traffic guidance information. However, since the construction progress of the traffic guidance information of the road sections connected to the road section BC is high, the vehicle position obtained by using the traffic guidance information is accurate. Since accurate positioning information can be obtained before and after the road section BC, the vehicle position information can be obtained at the road section BC by applying the local positioning technique through the integration of inertial data. Since the vehicle can still obtain more accurate position information at the road section BC, the vehicle can still perform autonomous driving at the road section BC. In this way, the vehicle will not be unable to continue autonomous driving due to the unreliability of traffic guidance information, even though the progress of traffic guidance information construction is low.

Although the local positioning technique can be utilized to achieve more accurate positioning even on road sections where the progress of constructing the traffic guidance information is low, since the local positioning technique obtains the position information by integrating the inertial data output from the IMU, the positioning error will be accumulated into the positioning result over time. Therefore, in some embodiments, the length of the road section on which the vehicle is currently traveling and where the progress of constructing the traffic guidance information is low may be less than the length threshold. That is, in the above example, the length of the road section BC may be less than the length threshold, thereby avoiding a decrease in the accuracy of the position information obtained by the vehicle at a later section of the road section BC as the positioning error accumulates.

In some embodiments, if the progress of constructing the traffic guidance information of the road section on which the vehicle is currently traveling is less than a predetermined progress threshold, the vehicle may be controlled to switch from the autonomous driving mode to the manual driving mode. To allow the user to take over the vehicle smoothly, in some embodiments, before the vehicle drives into a road section where the construction progress is less than the progress threshold, a prompt message may be output to prompt the user to enter a concentration state and prepare to take over the vehicle for manual driving.

In some embodiments, the maximum driving speed of the vehicle on a road section may also be controlled based on the construction progress of the traffic guidance information of the road section, the construction progress and the maximum driving speed being positively correlated. That is, the higher the construction progress of the traffic guidance information of the road section, the greater the maximum driving speed allowed by the vehicle on the road section. Accordingly, on the road section where the construction progress is low, the maximum driving speed allowed by the vehicle is lower, thus ensuring the safety of the autonomous driving of the vehicle.

As mentioned above, the difficulty of collecting road section description information varies on different road sections. For example, it is more difficult to collect the road section description information on a relatively congested roadway, and the vehicle may have to travel more times before sufficient road section description information can be collected. However, even on road sections where the progress of constructing the traffic guidance information is low due to the missing road section description information, the vehicle can still perform autonomous driving according to the method provided in the above embodiments. Then, to collect the missing road information, in some embodiments, when the vehicle is performing the autonomous driving along a commonly used route, the vehicle may determine the missing road section description information of the road section currently traveling on, such as the lack of environmental information of the left portion of the road section, and subsequently control the vehicle to collect the missing road section description information.

In some embodiments, a designated lane corresponding to the missing road section description information may be determined when the missing road section description information is collected. If, as in the above example, the vehicle has not yet collected the environmental information of the left portion of the road section currently traveling on, the vehicle may be controlled to travel to a lane where the environmental information of the left-portion can be collected, i.e., a designated lane corresponding to the missing road section description information, to collect the missing road section description information, without affecting the normal driving or deviating from the commonly used route. In some embodiments, while the vehicle is traveling to the designated lane to collect the missing road section description information, the vehicle may also be appropriately slowed down to allow the vehicle to more fully collect the missing road section description information.

In some embodiments, real-time road section description information collected by the vehicle may be obtained when the vehicle is traveling along a commonly used route. If the collected real-time road section description information does not match the road section description information included in the traffic guidance information, the traffic guidance information may be updated using the collected road section description information. In this way, the traffic guidance information can be continuously updated using the newly collected road section description information, thereby ensuring the accuracy and real-time updating of the traffic guidance information, and improving the autonomous driving of the vehicle to make more accurate and reliable decisions.

In some embodiments, if the real-time road section description information does not match the road section description information included in the traffic guidance information, which indicates that the traffic guidance information of the road section is less reliable and it would be riskier to carry out autonomous driving based on the traffic guidance information, the vehicle may be controlled to switch from the autonomous driving mode to the manual driving mode.

The present application provides a vehicle control method to determine a commonly used route for the vehicle based on a driving trajectory of the vehicle for multiple historical trips. Since the vehicle frequently travels along the commonly used route, historical road section description information on the commonly used route can be collected during each historical traveling. In this way, based on the historical road section description information, traffic guidance information for the commonly used routes can be constructed and be used to generate motion control instructions for guiding the vehicle to travel along the commonly used routes. Based on the control instructions, the vehicle can be controlled to drive automatically along the commonly used routes. By the above method, even in urban areas that are difficult to be covered by high definition maps, it is possible to realize autonomous driving of a vehicle along commonly used routes, thereby reducing the difficulty in technological realization of the autonomous driving.

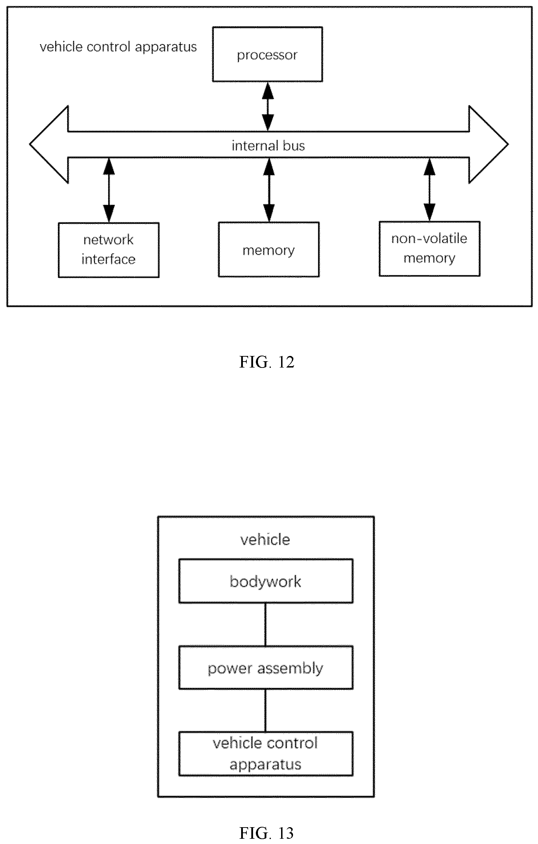

Based on the vehicle control method as described in any of the above embodiments, the present application also provides a schematic structure of a vehicle control device as shown in FIG. 12. As in FIG. 12, at the hardware level, the vehicle control device includes a processor, an internal bus, a network interface, a memory, and a non-volatile memory, and may of course include other hardware required for operations. The processor invokes a corresponding computer program from the non-volatile memory into the memory and then runs it to implement a vehicle control method as described in any of the above embodiments.

Optionally, the method includes:
obtaining a driving trajectory of a vehicle in multiple historical trips;
determining a commonly used route for the vehicle based on a plurality of the driving traj ectories;
obtaining historical road section description information collected when the vehicle historically traveled on one or more sections of the commonly used route; and
constructing traffic guidance information for the commonly used route based on the historical road section description information; the traffic guidance information being used to generate motion control instructions for guiding the vehicle along one or more of the road sections of the commonly used route.

Optionally, the historical driving trajectory includes a plurality of track points carrying position information; and the determining a commonly used route for the vehicle based on the plurality of the driving trajectories includes:
obtaining traveling times information of a vehicle that has historically traveled to a track point at the same location; and
determining the commonly used route based on the traveling times information.

Optionally, the method further includes:
collecting real-time road section description information while the vehicle is automatically driving along the commonly used route; and
updating the constructed traffic guidance information using the real-time road section description information.

Optionally, the method further includes:
generating a road section indication based on the traffic guidance information; and
displaying the roadway indication on an interactive interface of the vehicle.

Optionally, a navigation map is displayed on the interactive interface, and the road section indication is identified and displayed in an area of the navigation map corresponding to the commonly used route.

Optionally, the commonly used route includes a plurality of road sections, and the road section indication may include road section indications corresponding to the plurality of road sections; and the displaying the road section indication on an interactive interface of the vehicle includes:
obtaining a collection completion degree of road section description information corresponding to the plurality of road sections; and
for road sections with different collection completion degrees, conducting a differentiated display of the road section indications corresponding to the road sections on the interactive interface.

Optionally, the method further includes:
conducting a differentiated display of environmental areas around the road section on the interactive interface for road sections with different collection completion degrees.

Optionally, the differentiated display is realized by different display parameters.

Optionally, the display parameter includes one or more of color, brightness, grayscale, and transparency.

Optionally, the vehicle is equipped with sensors facing towards the exterior of the vehicle and the historical road section description information is collected based on the sensors; and/or
the vehicle is equipped with a communication device and the historical road section description information is received via the communication device.

Optionally, the sensor includes an image sensor, and the historical road section description information is obtained based on at least one image collected by the image sensor.

Optionally, the content of the at least one image includes other vehicles traveling on the road section, and the process of obtaining historical road section description information includes:
obtaining a trajectory of the other vehicle based on the at least one image; and
obtaining lane information and/or topology information for the road section based on the driving trajectories of the other vehicles.

Optionally, the content of the at least one image includes pedestrians, and the process of obtaining the historical road section description information includes:
obtaining a walking track of the pedestrian based on the at least one image; and
obtaining information about a sidewalk on at least one side of the road section based on the walking trajectory.

Optionally, the historical road section description information collected when the vehicle historically traveled on the road section includes historical road section description information collected when the vehicle historically traveled on different lanes of the road section.

Optionally, the commonly used route includes a plurality of road sections, and the traffic guidance information is constructed in segments according to the plurality of road sections.

Optionally, the process of constructing segments of traffic guidance information includes:
for each the road section, constructing traffic guidance information for the road section based on historical road section description information corresponding to the road section; and
splicing the traffic guidance information of each road section to obtain the traffic guidance information of the commonly used routes.

Optionally, the road sections included in the commonly used routes are divided in one or more of the following ways:
dividing the commonly used route into the plurality of sections based on equal distances; or
dividing the commonly used route into the plurality of road sections in accordance with the collection completion degree of historical road section descriptive information required for constructing the traffic guidance information; or
dividing the commonly used routes into the plurality of road sections according to road section type, and the road section type including one or more of the following:
   highway sections, urban sections, straight sections, turning sections, congested sections, and non-congested sections.

Optionally, the historical road section description information corresponding to the road section includes road section description information collected by the vehicle traveling through the road section in accordance with the commonly used route, and/or road section description information collected by the vehicle passing through the road section while traveling along other routes.

Optionally, the traffic guidance information is constructed while the vehicle is in a non-driving state.

Optionally, the constructing traffic guidance information for the commonly used routes based on the historical road section description information includes:
verifying whether the historical road section description information meets a preset eligible condition of collecting road section description information; and
constructing the traffic guidance information based on the historical road section description information that meets the eligibility conditions of road section description information collection.

Optionally, the historical road section description information is collected by one or more sensors of the vehicle while the vehicle is passing by the same location on the road section on multiple occasions; and the verifying that the historical road section description information meets a preset eligible condition for road section description information collection includes:
estimating, based on the historical road section description information, a pose of the vehicle at the time the historical road section description information was collected; and
if the estimated position conforms to a preset range of pose deviation, determining that the historical road section description information is in accordance with a preset eligible condition of collecting road section description information.

Optionally, the method further includes: generating an error message if any of the estimated poses does not comply with a preset range of pose deviations.

Optionally, the method further includes:
outputting an alert message if the traveling times of the vehicle traveling on the road section exceeds a number threshold, and the collection of road section description information corresponding to the road section fails.

Optionally, the alert message includes a reason for the failure of the road section description information collection and/or the missing road section description information.

Optionally, the vehicle is equipped with a communication module, and the method further includes:
sending the constructed traffic guidance information via the communication module to an electronic device in communication with the vehicle.

Optionally, a control method includes:
obtaining traffic guidance information for a commonly used route of a vehicle, the traffic guidance information being generated based on road section descriptive information collected when the vehicle historically traveled to any road section of the commonly used route;
generating control instructions for the vehicle based on the traffic guidance information; and controlling the vehicle to drive automatically along the commonly used route based on the control instructions.

Optionally, the vehicle is equipped with one or more sensors, and the method further includes:
obtaining information about the current road section description collected by the sensor;
obtaining position information of the vehicle based on the current road section description information and the traffic guidance information; and
the generating control instructions for the vehicle based on the traffic guidance information, comprising:
   generating a control instruction for the vehicle based on the traffic guidance information and the position information of the vehicle.

Optionally, the vehicle is equipped with an inertial measurement unit outputting inertial data of the vehicle for determining a first position information; the current road section description information and the traffic guidance information are used to determine a second position information; and the position information of the vehicle is obtained based on the first position information and the second position information.

Optionally, the step of obtaining position information of the vehicle includes:
determining a first weight corresponding to the first position information and a second weight corresponding to the second position information based on the progress of construction of the traffic guidance information; wherein the progress of construction is positively correlated with the second weight; and
determining position information for the vehicle based on the first position information, the second position information, the first weight and the second weight.

Optionally, the vehicle is equipped with an inertial measurement unit; there is a plurality of the road sections included in the commonly used routes, the traffic guidance information is constructed in segments according to the plurality of road sections, and the method further includes:
if the progress of constructing traffic guidance information for the road section on which the vehicle is currently traveling is lower than the progress of constructing traffic guidance information for the road sections connected to the road section front and back, obtaining position information of the vehicle based on the inertial data output from the inertial measurement unit; and controlling the vehicle to carry out autonomous driving along the commonly used route based on the position information.

Optionally, the length of the road section on which the vehicle is currently traveling is less than a length threshold.

Optionally, the method further includes:
controlling the vehicle to switch from an autonomous driving mode to a manual driving mode if the progress of constructing traffic guidance information for the current traveling section of the vehicle is less than a preset progress threshold.

Optionally, the method further includes:
Outputting an alert message to prompt a user to take over the vehicle before the vehicle enters a road section where the progress of constructing traffic guidance information is less than a progress threshold.

Optionally, the method further includes:
controlling a maximum travel speed of the vehicle based on a progress of constructing traffic guidance information; wherein the progress is positively correlated with the maximum travel speed.

Optionally, the method further includes:
determining the road section description information for a road section of which the traffic guidance information is missing; and
collecting missing road section description information when controlling the vehicle for autonomous driving along the commonly used routes.

Optionally, the controlling the vehicle to collect missing road section description information when driving automatically along the commonly used route includes:
determining a designated lane corresponding to the missing segment description information; and
controlling the vehicle to travel to a designated lane to collect missing road section description information when driving automatically along the commonly used route.

Optionally, the method further includes:
obtaining road section description information collected by the vehicle if the vehicle is traveling along the commonly used route, and updating the traffic guidance information using the collected road section description information if the collected road section description information does not match the road section description information included in the traffic guidance information.

Optionally, the method further includes:
controlling the vehicle to switch from an autonomous driving mode to a manual driving mode.

Based on the vehicle control method described in any of the above embodiments, the present application also provides a schematic diagram of a structure of a vehicle as shown in FIG. 13. As in FIG. 13, at the hardware level, the vehicle includes a bodywork, a power assembly, and a vehicle control device, the vehicle control device may, as described in FIG. 12, include a processor, an internal bus, a network interface, a memory, and a non-volatile memory, and of course, may include other hardware required for operations. The processor invokes a corresponding computer program from the non-volatile memory into the memory and then runs the program to implement a vehicle control method as described in any of the above embodiments.

Based on a vehicle control method described in any of the above embodiments, the present application further provides a computer program product including a computer program, the computer program being executable by a processor for performing the vehicle control method described in any of the above embodiments.

Based on the vehicle control method described in any of the above embodiments, the present application further provides a computer storage medium storing a computer program which is executable by a processor for executing the control method of a vehicle described in any of the above embodiments.

For the device embodiment, since it corresponds essentially to the method embodiment, it is sufficient to refer to a portion of the description of the method embodiment where relevant. The device embodiments described above are merely schematic, wherein the units described as illustrated as separated components may or may not be physically separated, and the components shown as units may or may not be physical units. That is, they may be located in one place or may be distributed to a plurality of network units. Some or all these units may be selected to fulfill the purpose of the embodiment scheme according to actual needs. It can be understood and implemented by a person of ordinary skill in the art without inventive effort.

It should be noted that, in this disclosure, relational terms such as first and second are used only to distinguish one entity or operation from another, and do not necessarily require or imply the existence of any such actual relationship or order between those entities or operations. The terms "including", "comprising", or any other variant thereof, are intended to cover non-exclusive inclusion, so that a process, method, article or apparatus comprising a set of elements includes not only those elements, but also other elements that are not expressly enumerated, or that a process, method, article or apparatus comprising a set of elements for such a process, method, article or apparatus is also included. Or it also includes elements that are inherent to such process, method, article or apparatus. Without further limitation, the fact that an element is defined by the phrase "comprises a ......" does not preclude the existence of another identical element in the process, method, article or apparatus that includes the element.

While methods and apparatuses provided in the embodiments of the present application are described in detail above, and specific examples are used herein to illustrate the principles and implementations of the present application, the above illustrations of the embodiments are only used to assist in understanding the methods of the present application and its core ideas. Meanwhile, for technical personnel having common knowledge in the field, there will be changes in the specific implementations and the scope of the application based on the ideas of the present application, which should not be construed as limiting the present application. In summary, the contents of this specification should not be construed as a limitation to this application.

## Claims

1. A vehicle control method, comprising:
obtaining driving trajectories of a vehicle in multiple historical trips;
determining a commonly used route of the vehicle based on a plurality of the driving traj ectories;
obtaining historical road section description information collected during historically traveling of the vehicle on one or more road sections of the commonly used route; and
constructing traffic guidance information for the commonly used route based on the historical road section description information, the traffic guidance information being used to generate motion control instructions for guiding the vehicle along one or more of the road sections of the commonly used route.

2. The method according to claim 1, wherein the driving trajectories comprise a plurality of track points carrying position information; and the determining a commonly used route for the vehicle based on a plurality of the driving trajectories comprising:
obtaining traveling times information of a vehicle that has historically traveled to a tra ck point at the same location; and
determining the commonly used route based on the traveling times information.

3. The method according to claim 1, further comprising:
collecting real-time road section description information while the vehicle is automatically driving along the commonly used route; and
updating the constructed traffic guidance information using the real-time road section description information.

4. The method according to claim 1, further comprising:
generating a road section indication based on the traffic guidance information; and
displaying the road section indication on an interactive interface of the vehicle.

5. The method according to claim 4, wherein a navigation map is displayed on the interactive interface, and the road section indication is displayed in an area of the navigation map corresponding to the commonly used route.

6. The method according to claim 4, wherein the commonly used route comprises a plurality of road sections, and the road section indication comprises a road section indication corresponding to the plurality of road sections; and
the displaying the road section indication on an interactive interface of the vehicle comprising:
obtaining a collection completion degree of road section description information corresponding to the plurality of road sections; and
for road sections with different collection completion degrees, conducting a differentiated display of the road section indications corresponding to the road sections on the interactive interface.

7. The method according to claim 6, further comprising:
conducting a differentiated display of environmental areas around the road section on the interactive interface for road sections having different collection completion degrees.

8. The method according to any one of claims 6 to 7, wherein the differentiated display is realized with different display parameters.

9. The method according to claim 8, wherein the display parameter comprises one or more of color, brightness, grayscale, and transparency.

10. The method according to claim 1, wherein the vehicle is equipped with sensors facing towards the exterior of the vehicle, and the historical road section description information is collected by the sensors; and/or
the vehicle is equipped with a communication device and the historical road section description information is received via the communication device.

11. The method according to claim 10, wherein the sensor comprises an image sensor, and the historical road section description information obtained based on at least one image collected by the image sensor.

12. The method according to claim 11, wherein the content of the at least one image comprises other vehicles traveling on the road section, and the process of obtaining historical road section description information comprises:
obtaining a trajectory of the other vehicle based on the at least one image; and
obtaining lane information and/or topology information for the road section based on the trajectories of the other vehicles.

13. The method according to claim 11, wherein the content of the at least one image comprises pedestrians, and the process of obtaining historical road section description information comprises:
obtaining a walking track of the pedestrian based on the at least one image; and
obtaining information about a sidewalk on at least one side of the road section based on the walking trajectory.

14. The method according to claim 1, wherein the historical road section description information collected when the vehicle historically travels on one or more road sections of the commonly used route comprises historical road section description information collected when the vehicle historically travels on different lanes of the road section.

15. The method according to claim 1, wherein the commonly used route comprises a plurality of road sections, and the traffic guidance information is constructed in segments according to the plurality of road sections.

16. The method according to claim 15, wherein the process of constructing traffic guidance information in segments comprises:
for each of the road section, constructing traffic guidance information for the road section based on historical road section description information corresponding to the road section; and
splicing the traffic guidance information of each road section to obtain the traffic guidance information of the commonly used routes.

17. The method according to claim 15, wherein the road sections in the commonly used routes are divided in one or more of the following ways:
dividing the commonly used routes into the plurality of road sections by equal distances; or
dividing the commonly used route into the plurality of road sections in accordance with the collection completion degree of historical road section description information required for constructing the traffic guidance information; or
dividing the commonly used routes into the plurality of road sections according to road section type, and the road section type comprising one or more of the following:
highway sections, urban sections, straight sections, turning sections, congested sections, and non-congested sections.

18. The method according to claim 15, wherein the historical road section description information corresponding to the road section comprises road section description information collected by the vehicle passing through the road section while traveling along the commonly used route, and/or road section description information collected by the vehicle passing through the road section while traveling along other routes.

19. The method according to claim 1, wherein the traffic guidance information is constructed while the vehicle is in a non-driving state.

20. The method according to claim 1, wherein the constructing traffic guidance information for the commonly used routes based on the historical road section description information comprises:
verifying whether the historical road section description information meets a preset eligible condition of collecting road section description information; and
constructing the traffic guidance information based on the historical road section description information that meets the eligible condition of road section description information collection.

21. The method according to claim 20, wherein the historical road section description information is collected by one or more sensors of the vehicle while the vehicle is passing by the same location on the road section on multiple occasions; and the process of verifying the historical road section description information meets the eligible condition of collecting road section description information comprising:
estimating, based on the historical road section description information, a pose of the vehicle at the time the historical road section description information was collected; and
if the estimated position conforms to a preset range of pose deviation, determining that the historical road section description information meets the eligible condition of collecting road section description information.

22. The method according to claim 21, further comprising: generating an error message if any estimated pose does not meet a preset range of pose deviations.

23. The method according to claim 1, further comprising:
outputting an alert message if the traveling times of the vehicle traveling on the road section exceeds a threshold and the collection of road section description information corresponding to the road section fails.

24. The method according to claim 23, wherein the alert message comprises a reason for failure of collecting road section description information and/or the missing road section description information.

25. The method according to claim 1, wherein the vehicle is equipped with a communication module, and the method further comprises:
sending the constructed traffic guidance information to an electronic device in communication with the vehicle via the communication module.

26. A vehicle control method, comprising:
obtaining traffic guidance information for a commonly used route of a vehicle, the traffic guidance information being generated based on road section description information collected when the vehicle historically traveled to any road section of the commonly used route;
generating control instructions for the vehicle based on the traffic guidance information; and
controlling the vehicle to drive automatically along the commonly used route based on the control instructions.

27. The method according to claim 26, wherein the vehicle is equipped with one or more sensors, and the method further comprises:
obtaining information about the current road section description collected by the sensor;
obtaining position information of the vehicle based on the current road section description information and the traffic guidance information,
wherein the generating control instructions for the vehicle based on the traffic guidance information comprises:
generating a control instructions for the vehicle based on the traffic guidance information and position information of the vehicle.

28. The method according to claim 27, wherein the vehicle is equipped with an inertial measurement unit outputting an inertial data of the vehicle for determining a first position information; the current road section description information as well as the traffic guideline information is used to determine a second position information; and the position information of the vehicle is obtained based on the first position information and the second position information.

29. The method according to claim 28, wherein the obtaining position information of a vehicle comprises:
determining a first weight corresponding to the first position information and a second weight corresponding to the second position information based on the progress of construction of the traffic guidance information, wherein the progress of construction is positively correlated with the second weight; and
determining position information for the vehicle based on the first position information, the second position information, the first weight and the second weight.

30. The method according to claim 26, wherein the vehicle is equipped with an inertial measurement unit; there is a plurality of the road sections in the commonly used route; the traffic guidance information is constructed in segments according to the plurality of road sections, the method further comprising:
if the progress of constructing traffic guidance information for the road section on which the vehicle is currently traveling is lower than the progress of constructing traffic guidance information for the road sections connected to the road section front and back, obtaining position information of the vehicle based on the inertial data output from the inertial measurement unit; and controlling the vehicle to carry out autonomous driving along the commonly used route based on the position information.

31. The method according to claim 30, wherein the length of the road section on which the vehicle is currently traveling is less than a length threshold.

32. The method according to claim 30, further comprising:
controlling a vehicle to switch from the autonomous driving mode to the manual driving mode if the progress of constructing traffic guidance information for the current traveling section of the vehicle is less than a preset progress threshold.

33. The method according to claim 32, further comprising:
outputting an alert message to prompt a user to take over the vehicle before the vehicle enters a road section where the progress of constructing traffic guidance information is less than a progress threshold.

34. The method according to claim 26, further comprising:
controlling a maximum speed of the vehicle based on a progress of constructing traffic guidance information; wherein the progress is positively correlated with the maximum speed.

35. The method according to claim 26, further comprising:
determining the road section description information for a road section of which the traffic guidance information is missing; and
collecting missing road section description information when controlling the vehicle for autonomous driving along the commonly used routes.

36. The method according to claim 35, wherein the collecting missing road section description information when controlling the vehicle for autonomous driving along the commonly used routes comprises:
determining a designated lane corresponding to the missing road section description information; and
controlling the vehicle to travel to the designated lane to collect missing road section description information when driving automatically along the commonly used routes.

37. The method according to claim 26, further comprising:
obtaining road section description information collected by the vehicle if the vehicle is traveling along the commonly used route, and updating the traffic guidance information using the collected road section description information if the collected road section description information does not match the road section description information included in the traffic guidance information.

38. The method according to claim 37, further comprising:
controlling the vehicle to switch from an autonomous driving mode to a manual driving mode.

39. A vehicle control apparatus comprising:
a processor;
a memory for storing processor executable instructions;
wherein the processor carries out the operation of the method according to any one of claims 1-38 by invoking the executable instructions.

40. A vehicle comprising:
a bodywork;
a power assembly;
a vehicle control apparatus comprising a processor, a memory for storing executable program instructions for the processor, wherein the processor carries out the operation of the method according to any one of claims 1-38 by invoking the executable instructions.

41. A computer program product comprising a computer program, wherein the computer program, when executed by a processor, implements the steps of a method according to any one of claims 1-38.

42. A computer storage medium storing computer instructions which, when being executed, perform the method according to any one of claims 1-38.
